# EUROPÄISCHE PATENTSCHRIFT

(11) **EP 3 276 189 B1**
(45) Veröffentlichungstag und Bekanntmachung des Hinweises auf die Patenterteilung: **25.03.2020**
(21) Anmeldenummer: 16186168.7
(22) Anmeldetag: 29.08.2016
(51) Int. Cl.: F16B 33/06

(54) **HOCHFESTE SCHRAUBE MIT EINER ENTHÄRTUNGSSCHICHT**
HIGH-STRENGTH SCREW INCLUDING AN UNHARDENING LAYER
VIS TRES RESISTANTE COMPRENANT UNE COUCHE SOUPLE

(30) Priorität: 29.07.2016 DE 102016114111
(43) Veröffentlichungstag der Anmeldung: 31.01.2018
(73) Patentinhaber: KAMAX Holding GmbH & Co. KG, 35315 Homberg (Ohm) (DE)
(72) Erfinder: Hartmann, Dr. Gunther, 36304 Alsfeld (DE); Dieterle, Horst, 35096 Weimar (DE)
(74) Vertreter: Müller Schupfner & Partner Patent- und Rechtsanwaltspartnerschaft mbB

(56) Entgegenhaltungen:
- DE-A1-102014 220 338
- DE-B3-102007 000 485
- US-A- 3 301 120

## Beschreibung

### TECHNISCHES GEBIET DER ERFINDUNG

Die Erfindung betrifft eine hochfeste Schraube mit einem Gewindeabschnitt mit einem Gewinde.

### STAND DER TECHNIK

Eine ultrahochfeste Schraube ist aus der europäischen Patentanmeldung EP 2 594 653 A1 bekannt.

Eine hochfeste Schraube mit einem Gewindeabschnitt mit einem Gewinde ist aus dem USamerikanischen Patent US 3,301,120 bekannt. Der Gewindeabschnitt weist eine Enthärtungsschicht auf, die als eine im Querschnitt gesehen äußere Randschicht mit einer im Vergleich zum Kern der Schraube reduzierten Härte ausgebildet ist. Die Schraube soll dadurch davor geschützt werden, dass aufgrund der durch das Gewinde verursachten Kerben und spitzen Winkel und somit der erhöhten Spannungskonzentrationen Risse in der Oberfläche der Schraube entstehen.

Eine Hybridschraube ist aus der deutschen Patentanmeldung DE 10 2014 220 338 A1 bekannt. Die Schraube wird aus zwei separaten Teilen zusammengesetzt. Dabei handelt es sich insbesondere um einen Kern aus einer hochfesten Aluminiumlegierung und einer auf den Kern aufzusetzenden Hülse aus einer weicheren Aluminiumlegierung.

Eine weitere Hybridschraube ist aus dem deutschen Patent DE 10 2007 000 485 B3 bekannt. Die Schraube setzt sich aus verschiedenen Teilen aus verschiedenen Materialien zusammen.

### AUFGABE DER ERFINDUNG

Der Erfindung liegt die Aufgabe zugrunde, eine hochfeste Schraube bereitzustellen, die mit weniger Werkzeugverschleiß beim Gewinderollen herstellbar ist.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine hochfeste Schraube mit einem Gewindeabschnitt mit einem Gewinde. Der Gewindeabschnitt weist eine Enthärtungsschicht auf, die als eine im Querschnitt gesehen äußere Randschicht mit einer im Vergleich zum Kern der Schraube reduzierten Härte ausgebildet ist.

Die Erfindung betrifft weiterhin ein Verfahren zum Herstellen einer hochfesten Schraube mit den folgenden Schritten:
- Herstellen eines Rohlings mit einem Kopf und einem Schaft durch Umformung,
- Wärmebehandlung des Rohlings zur Erreichung einer erhöhten Härte,
- Reduzieren der Härte des Rohlings zumindest in einem Teil der axialen Länge des Schafts zur Erzeugung einer Enthärtungsschicht, die als eine im Querschnitt gesehen äußere Randschicht mit einer im Vergleich zum Kern der Schraube reduzierten Härte ausgebildet ist, und
- Herstellen eines Gewindeabschnitts durch Umformung eines Gewindes in einem vom Kopf beabstandeten Bereich des Schafts.

Diese Verfahrensschritte werden in der angegebenen Reihenfolge durchgeführt. Es ist aber möglich, dass zwischen den Verfahrensschritten weitere Schritte durchgeführt werden.

Unter einer hochfesten Schraube wird eine Schraube mit einer Zugfestigkeit Rₘ von mindestens 800 N/mm² verstanden. Unter hochfesten Schrauben werden im Wesentlichen Schrauben der Festigkeitsklassen 8.8, 10.9 und 12.9 verstanden. Es kann sich bei der erfindungsgemäßen hochfesten Schraube aber auch um eine ultrahochfeste Schraube mit einer Zugfestigkeit Rₘ von mindestens 1.400 N/mm² handeln. Die erfindungsmäße "hochfeste" Schraube ist also mindestens eine hochfeste Schraube, kann aber auch eine ultrahochfeste Schraube sein.

Bei der neuen hochfesten Schraube kann es sich z. B. um eine Schraube handeln, deren Kern einer ultrahochfesten Schraube, deren äußerer Randbereich aber "nur" einer hochfesten Schraube zuzuordnen ist. Diese neue Schraube kann somit auch in solchen Anwendungsfällen Verwendung finden, in denen bisher nur Schrauben mit einer Festigkeitsklasse von 10.9 oder niedriger angewendet werden.

Unter dem nicht feststehenden Fachbegriff der Enthärtungsschicht wird in dieser Anmeldung die im Querschnitt gesehen äußere Randschicht der Schraube angesehen, die eine im Vergleich zum Kern der Schraube reduzierte Härte aufweist. Der Begriff der Enthärtung bringt dabei zum Ausdruck, dass die Härte reduziert wurde. Er bedeutet insbesondere nicht, dass ein zuvor durchgeführtes Härten vollständig rückgängig gemacht wurde.

Durch die Erstellung eines definierten Härteprofils und Festigkeitsprofils über den Querschnitt der Schraube ermöglicht die Erfindung die umformtechnische Herstellung von Gewinden auf dem wärmebehandelten Schaft der Schraube unter Beibehaltung der hohen Tragkraft der Schraube. Gleichzeitig lassen sich dadurch exzellente Dauerfestigkeitseigenschaften der Schraube durch die beim Rollen im Gewindebereich induzierten Druckeigenspannungen erzielen. Eine Werkstoffüberlastung bei der Gewindefertigung durch Umformen im hochfesten bzw. ultrafesten Zustand wird verhindert.

Durch die neue Enthärtungsschicht im Bereich des Gewindes erfolgt keine Rissbildung durch eine Materialüberlastung aufgrund des Umformvorgangs. Die für die Herstellung des Gewindes erforderlichen Rollkräfte sind reduziert. Dadurch ergibt sich ein reduzierter Werkzeugverschleiß. Durch die reduzierte Härte im äußeren Randbereich besitzt die neue Schraube auch eine erhöhte Resistenz gegenüber wasserstoffinduzierter Spannungsrisskorrosion.

Die radial innere Grenze der Enthärtungsschicht verläuft fließend. Sie kann aber so definiert werden, dass dort ein Härtewert vorliegt, der zwischen 96 % und 99 %, insbesondere 98 %, des Härtewerts des Kerns entspricht.

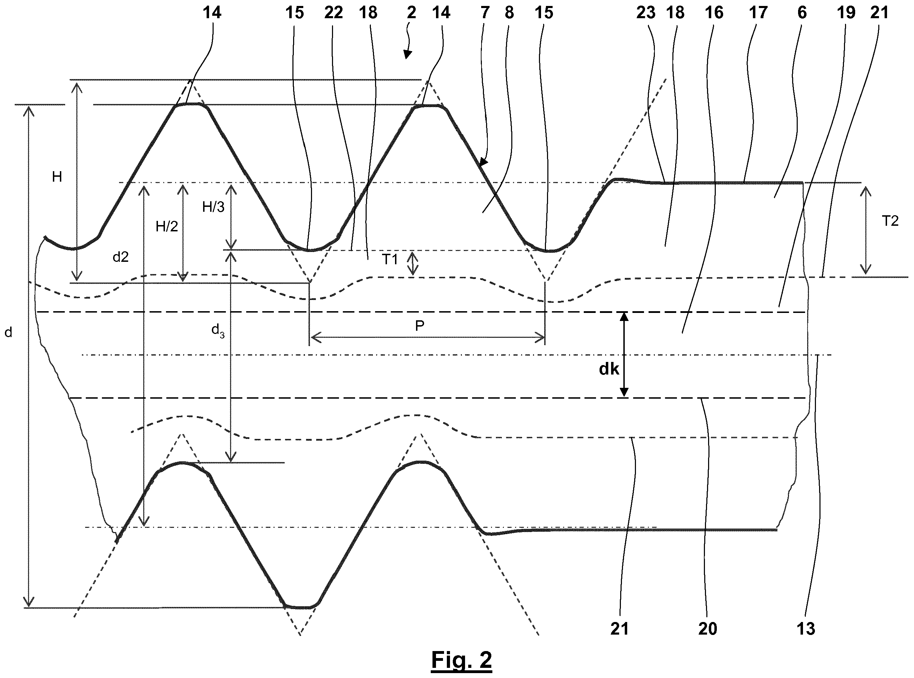

Die Schraube weist eine Längsmittelachse auf. Dies ist die Achse, um die die Schraube beim Anziehen und Lösen einer Schraubverbindung verdreht wird. Das Gewinde des Gewindeabschnitts der Schraube weist eine Höhe H auf, die der Höhe des scharf ausgeschnittenen gedachten Profilabschnitts entspricht. Das Gewinde weist eine sich um die Längsmittelachse windende Gewindespitze mit einem Durchmesser d und einen sich um die Längsmittelachse windenden Gewindegrund mit einem Durchmesser d3 auf. Die Enthärtungsschicht weist eine Tiefe T1 auf, die entlang der sich um die Längsmittelachse windenden Gewindespitze vorliegt und in einer radialen Richtung senkrecht zur Längsmittelachse bis zur gedachten axialen Verbindungslinie zwischen zwei benachbarten und um 360° versetzt angeordneten Stellen des Gewindegrunds gemessen wird. Diese Definition von T1 ist bei Betrachtung von Fig. 2 leichter nachvollziehbar. Die Enthärtungsschicht weist eine sich entlang der Längsmittelachse der Schraube ändernde Tiefe T auf. Diese jeweilige Tiefe T hängt davon ab, ob in dem jeweiligen Bereich eine Gewindespitze, ein Gewindegrund oder ein gewindefreier Bereich vorliegt. Diese sich ändernde Tiefe T der Enthärtungsschicht resultiert aus dem Umformvorgang beim Herstellen des Gewindes. Die Definition der Tiefe T1 dient demnach dazu, die Tiefe T der Enthärtungsschicht in einem ganz bestimmten Bereich festzulegen, um diese größenmäßig angeben zu können.

Eine weitere Definition besteht darin, dass der Kern als der im Querschnitt gesehen innere Bereich der Schraube bis zu einem Durchmesser des Kerns dk = d/4 zu verstehen ist. Die Härte des Kerns ist dabei als der Mittelwert der Härte innerhalb des Durchmessers des Kerns dk zu verstehen.

Die Härte der Enthärtungsschicht kann als der Mittelwert der Härte innerhalb der Enthärtungsschicht verstanden werden. Diese Definition bietet sich an, da an verschiedenen Stellen der Enthärtungsschicht in radialer Richtung verschiedene Härtewerte vorliegen. Die Enthärtungsschicht ist in ihrem radial innen liegenden Bereich härter als in ihrem radial außen liegenden Bereich. Die Härte steigt also von außen nach innen in ihr an.

Die oberhalb definierte Tiefe T1 kann zwischen 0,1 mm und 3,0 mm, insbesondere zwischen 0,2 mm und 2,8 mm, betragen.

Das Gewinde des Gewindeabschnitts der Schraube kann eines der folgenden Wertepaare aufweisen:
- Höhe H: 0,4 mm bis 0,7 mm; Tiefe T1: 0,25 mm bis 1,8 mm, oder
- Höhe H: 0,71 mm bis 1,0 mm; Tiefe T1: 0,25 mm bis 2,7 mm, oder
- Höhe H: 1,01 mm bis 1,5 mm; Tiefe T1: 0,2 mm bis 2,7 mm, oder
- Höhe H: 1,51 mm bis 2,0 mm; Tiefe T1: 0,2 mm bis 2,7 mm, oder
- Höhe H: 2,01 mm bis 2,5 mm; Tiefe T1: 0,15 mm bis 3,0 mm, oder
- Höhe H: 2,51 mm bis 4,0 mm; Tiefe T1: 0,15 mm bis 4,0 mm.

Die Enthärtungsschicht kann außen eine Härte von 300 HV bis 450 HV, insbesondere von 320 HV bis 380 HV, besitzen. Der Kern kann eine Härte von 400 HV bis 650 HV, insbesondere von 450 HV bis 570 HV, besitzen. Die Härtewerte der Enthärtungsschicht und des Kerns sind dabei so aufeinander abgestimmt, dass die Enthärtungsschicht eine geringere Härte als der Kern aufweist. In diesem Sinne kann der Kern insbesondere eine Härte von 400 HV bis 650 HV, insbesondere von 450 HV bis 570 HV, und die Enthärtungsschicht außen eine Härte von 300 HV bis 380 HV besitzen. Außen ist dabei als der radial äußere Bereich der Enthärtungsschicht zu verstehen.

Die Härte der Enthärtungsschicht kann außen um mindestens 7 %, insbesondere zwischen 10 % und 50 %, insbesondere zwischen 20 % und 40 %, gegenüber der Härte des Kerns reduziert sein.

Der Mittelwert der Härte der Enthärtungsschicht kann um mindestens 5 %, insbesondere zwischen 7 % und 45 %, insbesondere zwischen 10 % und 35 %, gegenüber der Härte des Kerns reduziert sein.

Die Enthärtungsschicht besitzt außen eine Zugfestigkeit von zwischen 1000 N/mm² und 1200 N/mm². Der Kern besitzt eine Zugfestigkeit von zwischen 1300 N/mm² und 2500 N/mm², insbesondere zwischen 1400 N/mm² und 1850 N/mm², besitzen. Diese Festigkeitswerte der Enthärtungsschicht und des Kerns werden so miteinander koordiniert, dass die Enthärtungsschicht eine geringere Festigkeit als der Kern aufweist. Der Kern kann also insbesondere eine Zugfestigkeit von zwischen 1300 N/mm² und 2000 N/mm², insbesondere zwischen 1400 N/mm² und 1850 N/mm², und die Enthärtungsschicht außen eine Zugfestigkeit von zwischen 1000 N/mm² und 1200 N/mm² besitzen.

Neben dem Gewindeabschnitt weist die Schraube auch einen Kopf auf. Sie kann zusätzlich einen gewindefreien Schaftabschnitt aufweisen.

Der gewindefreie Schaftabschnitt kann ebenfalls eine Enthärtungsschicht aufweisen, die als eine im Querschnitt gesehen äußere Randschicht mit einer im Vergleich zum Kern der Schraube reduzierten Härte ausgebildet ist. Die oberhalb beschriebenen Vorteile der Enthärtungsschicht können also nicht nur auf den Gewindeabschnitt, sondern auch einen gewindefreien Schaftabschnitt angewendet werden. Die Enthärtungsschicht kann sich dabei entweder über die gesamte Länge des Schaftabschnitts oder nur über einen Teil der Länge erstrecken. Sie kann sich dabei auch über die Kopfauflageübergangsfläche - d. h. die Übergangsfläche zwischen der Kopfauflagefläche des Kopfs der Schraube und dem gewindefreien Schaftabschnitt - erstrecken.

Bei dem oberhalb beschriebenen Verfahren zum Herstellen einer hochfesten Schraube kann das Reduzieren der Härte durch induktives Erwärmen des Rohlings erfolgen. Dies erfolgt insbesondere mittels einer stromführenden Spule, die einem elektromagnetischen Wechselfeld ausgesetzt ist und im Material des Schraubenrohlings Wirbelströme erzeugt. Da diese entgegengesetzt zum ursprünglichen Strom fließen, entsteht Wärme.

An das induktive Erwärmen des Rohlings kann sich ein Kühlen des Rohlings anschließen. Dies ist insbesondere dann vorteilhaft, wenn die Erwärmung des Stahls bzw. der Randschicht auf eine Temperatur unterhalb des Beginns der Austenitumwandlung Ac1 von zwischen 500 °C und 750 °C, insbesondere zwischen 600 °C und 723 °C, begrenzt wird. Durch die Koordinierung der Schritte des Erwärmens und des Kühlens wird die gewünschte Reduzierung der Härte und Festigkeit erreicht. Das Kühlen erfolgt insbesondere durch Wasser mit einer Temperatur von etwa 10 °C bis etwa 50 °C. Es kann über eine Zeitspanne von zwischen etwa 0,05 s und 30 s, insbesondere zwischen etwa 0,1 s und 10 s, erfolgen.

Das induktive Erwärmen kann mit einer Frequenz von zwischen 20 kHz und 500 kHz, insbesondere zwischen etwa 100 kHz und 400 kHz, erfolgen.

Das induktive Erwärmen kann über eine Zeitspanne von zwischen etwa 0,05 s und 30 s, insbesondere zwischen etwa 0,1 s und 10 s, erfolgen.

Das Reduzieren der Härte durch Erwärmen des Rohlings kann aber auch beispielsweise mit einem Laser erfolgen. Auch an dieses Erwärmen kann sich insbesondere ein geregeltes Kühlen zur Erreichung der gewünschten Reduzierung der Härte der Enthärtungsschicht anschließen.

Bei allen oberhalb beschriebenen Verfahrensschritten kann die Schraube weiterhin eines oder mehrere der oberhalb beschriebenen Merkmale aufweisen.

Bei der Wärmebehandlung handelt es sich um Bainitisieren. Bei der Umformung zum Herstellen des Gewindeabschnitts kann es sich insbesondere um Rollen oder Walzen handeln. Es kann sich insbesondere um eine Kaltumformung handeln.

Die neue hochfeste Schraube weist ein Bainitgefüge auf, welches zumindest teilweise durch Bainitisieren erzeugt wurde. Das Bainitgefüge führt zu einer sehr hohen Zugfestigkeit bei einer ebenfalls sehr hohen Duktilität. Diese hohe Duktilität oder Zähigkeit unterscheidet das Bainitgefüge wesentlich von einem Martensitgefüge, welches im Stand der Technik in bekannter Weise durch Härten mit anschließendem Anlassen erzeugt wird. Bei dem Zwischenstufenvergüten erfolgt die Härtung stattdessen durch ein schnelles Abkühlen aus der Austenitphase durch eine isothermische Gefügeumwandlung in der Bainitstufe. Dabei verweilt das Teil, insbesondere die Schraube, bei einer isothermen Temperatur im Salzbad, bis die Gefügeumwandlung vom Austenit zum Bainit über den gesamten Querschnitt abgeschlossen ist. Der bei der martensitischen Härtung erforderliche Anlassvorgang kann vorzugsweise entfallen. Damit wird auch die Neigung zum Härteverzug verringert.

Das für die Herstellung der hochfesten Schraube verwendete Ausgangsmaterial wird üblicherweise als "Draht" bezeichnet. Der für die neue hochfeste Schraube verwendete Draht kann aus kaltumformbarem unvergüteten Stahl bestehen und einen Kohlenstoffgehalt von etwa 0,2 % bis 0,6 % oder etwa 0,2 % bis 0,5 % besitzen. Der Stahl kann Legierungsanteile, insbesondere Cr, Mo, Mn, Ni, V, Nb oder Ti von insbesondere insgesamt mehr als etwa 1,1 % aufweisen. Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Gewindeabschnitt die Rede ist, ist dies so zu verstehen, dass genau ein Gewindeabschnitt, zwei Gewindeabschnitte oder mehr Gewindeabschnitte vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen (teilweisen) Längsschnitt durch eine Schraubverbindung mit einer neuen hochfesten Schraube.
- **Fig. 2**: zeigt einen Längsschnitt durch eines Teils der Schraube.
- **Fig. 3**: zeigt den Verlauf der Härte über den Querschnitt der Schraube im Gewindeabschnitt.
- **Fig. 4**: zeigt den Verlauf der Härte über den Querschnitt der Schraube im Schaftabschnitt.
- **Fig. 5**: zeigt in einer Tabelle beispielhafte Werte der Enthärtungsschicht bei verschiedenen Schraubengrößen.

### FIGURENBESCHREIBUNG

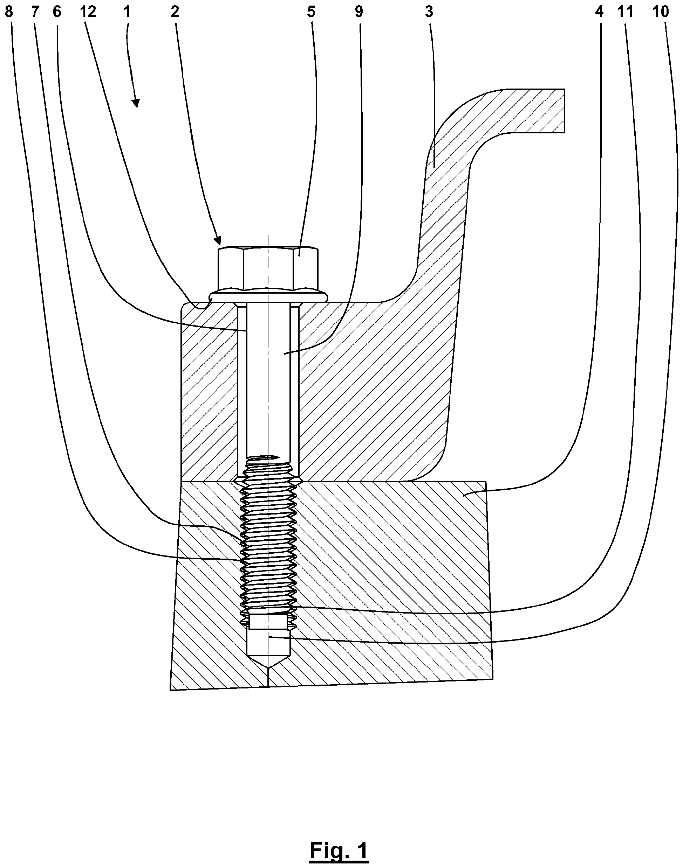

**Fig. 1** zeigt ein Ausführungsbeispiel einer Schraubverbindung 1 mit einer neuen hochfesten Schraube 2 sowie einem ersten Bauteil 3 und einem zweiten Bauteil 4. Die Schraube 2 weist einen Kopf 5, einen gewindefreien Schaftabschnitt 6 und einen Gewindeabschnitt 7 mit einem als Außengewinde ausgebildeten Gewinde 8 auf. Das erste Bauteil 3 weist eine Bohrung 9 und das zweite Bauteil 4 eine Bohrung 10 auf. Die Bohrung 10 weist ein zum Außengewinde der Schraube 2 korrespondierendes Innengewinde 11 auf. Über die ineinander eingreifenden Gewinde 8, 11 und die Kopfauflagefläche 12 des Kopfs 5 der Schraube 2 wird die für die sichere Schraubverbindung 1 erforderliche Klemmkraft erzielt.

Bei der Schraube 2 handelt es sich um eine hochfeste Schraube mit einer Zugfestigkeit von mindestens 800 N/mm², insbesondere eine ultrahochfeste Schraube mit einer Zugfestigkeit von mindestens 1400 N/mm². Die Schraube 2 weist ein insbesondere durch Zwischenstufenvergüten erzeugtes Bainitgefüge auf, welches sich im Wesentlichen über den gesamten Querschnitt der Schraube 2 erstreckt.

**Fig. 2** zeigt einen Querschnitt durch die hochfeste Schraube 2 mit einer Längsmittelachse 13. Das Gewinde 8 weist weiterhin in üblicher Weise eine sich um die Längsmittelachse 13 windende Gewindespitze 14 und einen sich ebenfalls um die Längsmittelachse 13 windenden Gewindegrund 15 auf. Es kann sich um ein metrisches Gewinde 8 oder eine anderes Gewinde 8 handeln.

Die Schraube 2 weist einen Kern 16 auf, der sich im Bereich der Längsmittelachse 13 und den diesen umgebenden radialen Bereich zwischen den Linien 19 und 20 erstreckt.

In dem radial vom Kern 16 entfernten Bereich der Schraube 2 befindet sich eine Randschicht 17. Die Randschicht 17 ist erfindungsgemäß als Enthärtungsschicht 18 ausgebildet, die im Vergleich zum Kern 8 der Schraube 1 eine reduzierte Härte aufweist, die nachträglich erzeugt wurde. Die radial äußere Grenze der Enthärtungsschicht 18 wird durch die äußere Oberfläche der Schraube 2 gebildet. Die radial innere Grenze der Enthärtungsschicht 18 verläuft fließend. Sie ist hier aber durch eine Linie 21 symbolisiert.

Im vorliegende Beispiel erstreckt sich die Enthärtungsschicht 18 nicht nur über den Gewindeabschnitt 7, sondern auch über den Schaftabschnitt 6. In dem Schaftabschnitt 6 liegt die Tiefe T2 der Enthärtungsschicht 18 zwischen der Linie 21 und der äußere Oberfläche der Schraube 2 vor.

In dem Gewindeabschnitt 7 erstreckt sich die Enthärtungsschicht 18 zwar ebenfalls bis zur äußeren Oberfläche der Schraube 2. Die eingezeichnete Tiefe T1 bezeichnet aber nur einen Teil der Tiefe der Enthärtungsschicht 18. Die Tiefe T1 liegt entlang der sich um die Längsmittelachse 13 windendenden Gewindespitze 14 vor und wird in der radialen Richtung senkrecht zur Längsmittelachse 13 bis zur gedachten axialen Verbindungslinie 22 zwischen zwei benachbarten und um 360° versetzt angeordneten Stellen des Gewindegrunds 15 gemessen.

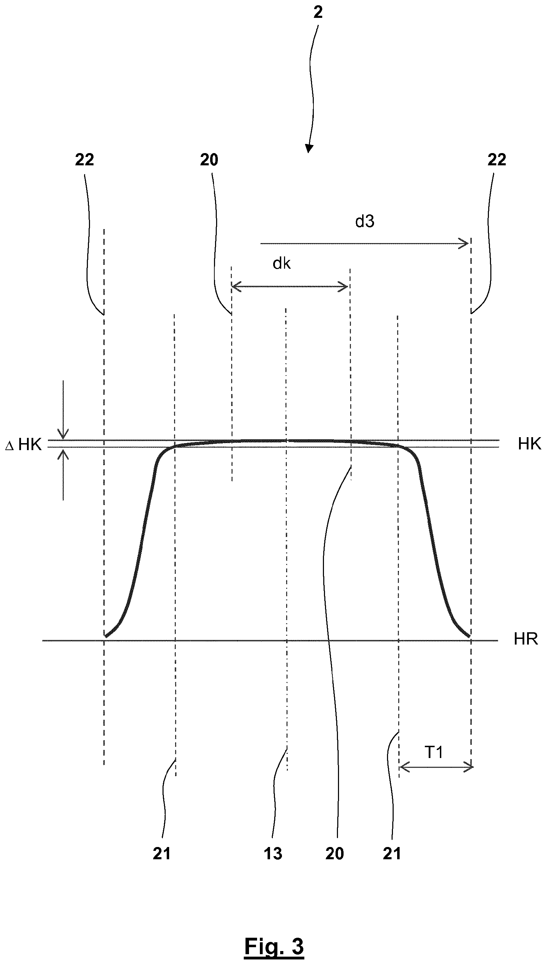

**Fig. 3** zeigt den Verlauf der Härte über den Querschnitt der Schraube 2 im Gewindeabschnitt 7. Die in Fig. 3 angegebenen Variablen haben die folgenden Bedeutungen:
d = Außendurchmesser des Gewindes
dk = Durchmesser des Kerns der Schraube
HK = Härte des Kerns der Schraube
HR = Härte der Randschicht (Enthärtungsschicht)
Δ HK = Härtedifferenz im Kern der Schraube
T1 = (Teil der) Tiefe der Randschicht im Gewindeabschnitt

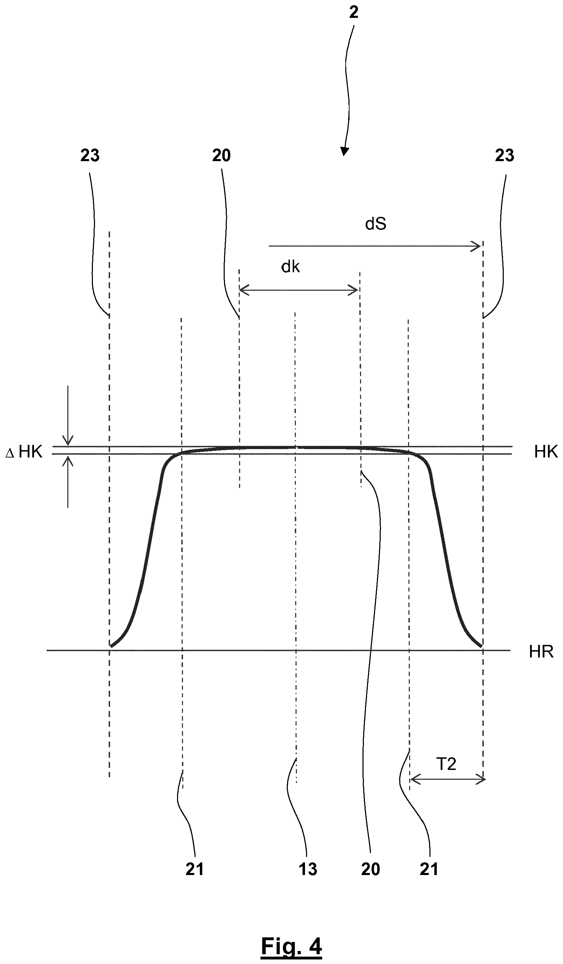

**Fig. 4** zeigt den Verlauf der Härte über den Querschnitt der Schraube 2 im Schaftabschnitt 6. Die zusätzlich zu den in Fig. 3 vorhandenen Variablen haben die folgenden Bedeutungen:
ds = Schaftdurchmesser der Schraube
T2 = Tiefe der Randschicht im Schaftabschnitt

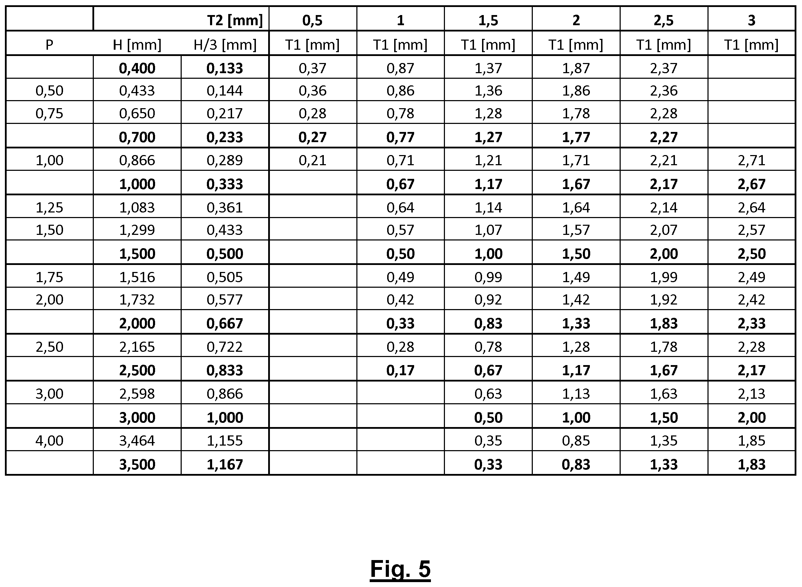

**Fig. 5** zeigt in einer Tabelle beispielhafte Werte der Enthärtungsschicht 18 bei verschiedenen Größen der Schraube 2. Die in Fig. 5 zusätzlich angegebenen Variablen haben die folgenden Bedeutungen:
P = Steigung des Gewindes
H = Höhe des scharf ausgeschnittenen gedachten Profildreiecks

### BEZUGSZEICHENLISTE

- 1: Schraubverbindung
- 2: Schraube
- 3: Bauteil
- 4: Bauteil
- 5: Kopf
- 6: Schaftabschnitt
- 7: Gewindeabschnitt
- 8: Gewinde
- 9: Bohrung
- 10: Bohrung
- 11: Innengewinde
- 12: Kopfauflagefläche
- 13: Längsmittelachse
- 14: Gewindespitze
- 15: Gewindegrund
- 16: Kern
- 17: Randschicht
- 18: Enthärtungsschicht
- 19: Linie
- 20: Linie
- 21: Linie
- 22: Verbindungslinie
- 23: Linie

## Patentansprüche

1. Hochfeste Schraube (1) mit einem Gewindeabschnitt (7) mit einem Gewinde (8), wobei der Gewindeabschnitt (7) eine Enthärtungsschicht (18) aufweist, die als eine im Querschnitt gesehen äußere Randschicht (17) mit einer im Vergleich zum Kern (16) der Schraube (1) reduzierten Härte ausgebildet ist, **dadurch gekennzeichnet, dass**
die Schraube (1) ein Bainitgefüge aufweist,
der Kern (16) eine Zugfestigkeit von zwischen 1300 N/mm² und 2500 N/mm² besitzt, und
die Enthärtungsschicht (18) außen eine Zugfestigkeit von zwischen 1000 N/mm² und 1200 N/mm² besitzt.

2. Schraube (1) nach Anspruch 1, **dadurch gekennzeichnet, dass**
die Schraube eine Längsmittelachse (13) aufweist,
das Gewinde (8) eine Höhe H aufweist, die der Höhe des scharf ausgeschnittenen gedachten Profilabschnitts entspricht,
das Gewinde (8) eine sich um die Längsmittelachse (13) windendende Gewindespitze (14) mit einem Durchmesser d und einen sich um die Längsmittelachse (13) windendenden Gewindegrund (15) mit einem Durchmesser d3 aufweist, und
die Enthärtungsschicht (18) eine Tiefe T1 aufweist, die entlang der sich um die Längsmittelachse (13) windendenden Gewindespitze (14) vorliegt und in einer radialen Richtung senkrecht zur Längsmittelachse (13) bis zur gedachten axialen Verbindungslinie zwischen zwei benachbarten und um 360° versetzt angeordneten Stellen des Gewindegrunds (15) gemessen wird.

3. Schraube (1) nach Anspruch 2, **dadurch gekennzeichnet, dass**
der Kern (16) der im Querschnitt gesehen innere Bereich der Schraube (1) bis zu einem Durchmesser des Kerns dk = d/4 ist, und
die Härte des Kerns (16) der Mittelwert der Härte innerhalb des Durchmessers des Kerns dk ist.

4. Schraube (1) nach mindestens einem der vorhergehenden Ansprüche, **dadurch gekennzeichnet, dass** die Härte der Enthärtungsschicht (18) der Mittelwert der Härte innerhalb der Enthärtungsschicht (18) ist.

5. Schraube (1) nach mindestens einem der Ansprüche 2 bis 4, **dadurch gekennzeichnet, dass** die Tiefe T1 zwischen 0,1 mm und 3,0 mm, insbesondere zwischen 0,2 mm und 2,8 mm, beträgt.

6. Schraube (1) nach mindestens einem der Ansprüche 2 bis 4, **dadurch gekennzeichnet, dass** das Gewinde (8) eines der folgenden Wertepaare aufweist:
- Höhe H: 0,4 mm bis 0,7 mm; Tiefe T1: 0,25 mm bis 1,8 mm, oder
- Höhe H: 0,71 mm bis 1,0 mm; Tiefe T1: 0,25 mm bis 2,7 mm, oder
- Höhe H: 1,01 mm bis 1,5 mm; Tiefe T1: 0,2 mm bis 2,7 mm, oder
- Höhe H: 1,51 mm bis 2,0 mm; Tiefe T1: 0,2 mm bis 2,7 mm, oder
- Höhe H: 2,01 mm bis 2,5 mm; Tiefe T1: 0,15 mm bis 3,0 mm, oder
- Höhe H: 2,51 mm bis 4,0 mm; Tiefe T1: 0,15 mm bis 4,0 mm.

7. Schraube (1) nach mindestens einem der vorhergehenden Ansprüche, **dadurch gekennzeichnet, dass**
der Kern (16) eine Härte von 400 HV bis 650 HV, insbesondere von 450 HV bis 570 HV, besitzt, und
die Enthärtungsschicht (18) außen eine Härte von 300 HV bis 380 HV besitzt.

8. Schraube (1) nach mindestens einem der vorhergehenden Ansprüche, **dadurch gekennzeichnet, dass** die Härte der Enthärtungsschicht (18) außen um mindestens 7 %, insbesondere zwischen 10 % und 50 %, insbesondere zwischen 20 % und 40 %, gegenüber der Härte des Kerns (16) reduziert ist.

9. Schraube (1) nach mindestens einem der vorhergehenden Ansprüche, **dadurch gekennzeichnet, dass** der Kern (16) eine Zugfestigkeit von zwischen 1400 N/mm² und 1850 N/mm² besitzt.

10. Schraube (1) nach mindestens einem der vorhergehenden Ansprüche, **gekennzeichnet durch** einen Kopf (5) und einen gewindefreien Schaftabschnitt (6), wobei der Schaftabschnitt (6) eine Enthärtungsschicht (18) aufweist, die als eine im Querschnitt gesehen äußere Randschicht (17) mit einer im Vergleich zum Kern (16) der Schraube (1) reduzierten Härte ausgebildet ist.

11. Schraube (1) nach Anspruch 10, **dadurch gekennzeichnet, dass** sich die Enthärtungsschicht
nicht über die gesamte Länge des Schaftabschnitts (6) erstreckt, oder
über die gesamte Länge des Schaftabschnitts (6) und die Kopfauflageübergangsfläche erstreckt.

12. Verfahren zum Herstellen einer hochfesten Schraube (1) nach mindestens einem der vorhergehenden Ansprüche, mit den Schritten:
Herstellen eines Rohlings mit einem Kopf (5) und einem Schaft durch Umformung, **gekennzeichnet durch**
Wärmebehandeln des Rohlings durch Bainitisieren zur Erzeugung eines Bainitgefüges zur Erreichung einer erhöhten Härte,
Reduzieren der Härte des Rohlings zumindest in einem Teil der axialen Länge des Schafts zur Erzeugung einer Enthärtungsschicht (18), die als eine im Querschnitt gesehen äußere Randschicht (17) mit einer im Vergleich zum Kern (16) der Schraube (1) reduzierten Härte ausgebildet ist,
wobei dies derart erfolgt, dass der Kern (16) eine Zugfestigkeit von zwischen 1300 N/mm² und 2500 N/mm² und die Enthärtungsschicht (18) außen eine Zugfestigkeit von zwischen 1000 N/mm² und 1200 N/mm² besitzt, und
Herstellen eines Gewindeabschnitts (7) durch Umformung eines Gewindes (8) in einem vom Kopf (5) beabstandeten Bereich des Schafts.

13. Verfahren nach Anspruch 12, **dadurch gekennzeichnet, dass** das Reduzieren der Härte durch induktives Erwärmen des Rohlings erfolgt.

14. Verfahren nach Anspruch 12 oder 13, **dadurch gekennzeichnet, dass** das induktive Erwärmen
mit einer Frequenz von zwischen etwa 20 kHz und 500 kHz, insbesondere zwischen etwa 100 kHz und 400 kHz, erfolgt, und/oder
über eine Zeitspanne von zwischen etwa 0,05 s und 30 s, insbesondere zwischen etwa 0,1 s und 10 s, erfolgt.

15. Verfahren nach mindestens einem der Ansprüche 12 bis 14, **dadurch gekennzeichnet, dass** das Reduzieren der Härte durch Erwärmen des Rohlings mit einem Laser erfolgt.

## Claims

1. High-strength screw (1) having a threaded portion (7) having a thread (8), wherein the threaded portion (7) has an unhardening layer (18) forming the outer surface layer, viewed in cross-section, having a reduced hardness with respect to the core (16) of the screw (1) **characterized in that**
the screw (1) has a bainite structure,
the core (16) has a tensile strength of between 1300 N/mm² and 2500 N/mm²; and
the unhardening layer (18) at its outside has a tensile strength of between 1000 N/mm² and 1200 N/mm².

2. Screw (1) according to Claim 1, **characterized in that**
the screw has a longitudinal central axis (13),
the thread (8) has a height H which corresponds to the height of the sharply cut imaginary profile section,
the thread (8) has a thread tip (14) with a diameter d winding about the longitudinal central axis (13) and a thread base (15) with a diameter d3 winding about the longitudinal central axis (13), and
the unhardening layer (18) has a depth T1 which is present along the thread tip (14) winding about the longitudinal central axis (13) and is measured in a radial direction perpendicular to the longitudinal central axis (13) up to the imaginary axial connecting line between two adjacent locations of the thread base (15) which are offset by 360°.

3. Screw (1) according to claim 2, **characterized in that**
the core (16) is the inner region of the screw (1) up to a diameter of the core dk = d/4 as seen in cross-section, and
the hardness of the core (16) is the mean value of the hardness within the diameter of the core dk.

4. Screw (1) according to at least one of the preceding claims, **characterized in that** the hardness of the unhardening layer (18) is the mean value of the hardness within the unhardening layer (18).

5. Screw (1) according to at least one of claims 2 to 4, **characterized in that** the depth T1 is between 0.1 mm and 3.0 mm, in particular between 0.2 mm and 2.8 mm.

6. Screw (1) according to at least one of claims 2 to 4, **characterized in that** the thread (8) has one of the following pairs of values:
- height H: 0.4 mm to 0.7 mm; depth T1: 0.25 mm to 1.8 mm, or
- Height H: 0.71 mm to 1.0 mm; Depth T1: 0.25 mm to 2.7 mm, or
- Height H: 1.01 mm to 1.5 mm; Depth T1: 0.2 mm to 2.7 mm, or
- Height H: 1.51 mm to 2.0 mm; Depth T1: 0.2 mm to 2.7 mm, or
- Height H: 2.01 mm to 2.5 mm; Depth T1: 0.15 mm to 3.0 mm, or
- Height H: 2.51 mm to 4.0 mm; Depth T1: 0.15 mm to 4.0 mm.

7. Screw (1) according to at least one of the preceding claims, **characterized in that**
the core (16) has a hardness of 400 HV to 650 HV, in particular of 450 HV to 570 HV, and
the unhardening layer (18) has a hardness of 300 HV to 380 HV on the outside.

8. Screw (1) according to at least one of the preceding claims, **characterized in that**
the external hardness of the unhardening layer (18) is reduced by at least 7%, in particular between 10% and 50%, in particular between 20% and 40%, with respect to the hardness of the core (16).

9. Screw (1) according to at least one of the preceding claims, **characterized in that**
the core (16) has a tensile strength of between 1300 N/mm² and 2500 N/mm², in particular between 1400 N/mm² and 1850 N/mm².

10. Screw (1) according to at least one of the preceding claims, **characterized by** a head (5) and a threadless shank portion (6), said shank portion (6) comprising a unhardening layer (18) formed as an outer surface layer (17), seen in cross-section, having a reduced hardness compared to the core (16) of the screw (1).

11. Screw (1) according to claim 10, **characterized in that** the unhardening layer
does not extend over the entire length of the shank portion (6), or
does extend over the entire length of the shank portion (6) and the head support transition surface.

12. Method of manufacturing a high strength screw (1), in particular a screw (1) according to at least one of the foregoing claims, comprising the steps of:
production of a blank with a head (5) and a shank by forming,
**characterized by**
heat treatment of the blank using austempering for creating a bainite structure to achieve an increased hardness,
reducing the hardness of the blank at least in a part of the axial length of the shank to produce a unhardening layer (18) formed as an outer surface layer (17) with a reduced hardness compared to the core (16) of the screw (1) as seen in cross-section,
wherein this is executed such that the core has a tensile strength of between 1300 N/mm² and 2500 N/mm²; and the unhardening layer at its outside has a tensile strength of between 1000 N/mm² and 1200 N/mm², and
producing a threaded portion (7) by forming a thread (8) in a region of the shank spaced from the head (5).

13. Method according to claim 12, **characterized in that** the hardness is reduced by inductively heating the blank.

14. Method according to Claim 12 or 13, **characterized in that** the inductive heating takes place
at a frequency of between approximately 20 kHz and 500 kHz, in particular between approximately 100 kHz and 400 kHz, and/or
over a time period of between approximately 0.05 s and 30 s, in particular over a period of time of between approximately 0.05 s and 30 s.

15. Method according to at least one of claims 12 to 14, **characterized in that** the hardness is reduced by heating the blank with a laser.

## Revendications

1. Vis à haute résistance (1) comportant une portion filetée (7) ayant un filetage (8),
la portion filetée (7) présentant une couche d'assouplissement (18) qui est réalisée sous la forme d'une couche de bord extérieure (17), vue en coupe transversale, ayant une dureté réduite par comparaison au cœur (16) de la vis (1),
**caractérisée en ce que**
la vis (1) présente une structure bainitique,
le cœur (16) possède une résistance à la traction comprise entre 1300 N/mm² et 2500 N/mm², et
la couche d'assouplissement (18) possède à l'extérieur une résistance à la traction comprise entre 1000 N/mm² et 1200 N/mm².

2. Vis (1) selon la revendication 1,
**caractérisée en ce que**
la vis présente un axe central longitudinal (13),
le filetage (8) présente une hauteur H qui correspond à la hauteur de la portion de profil imaginaire taillée à vif,
le filetage (8) présente une crête (14) enroulée autour de l'axe central longitudinal (13) et ayant un diamètre d, et un fond de filetage (15) enroulé autour de l'axe central longitudinal et ayant un diamètre d3, et
la couche d'assouplissement (10) présente une profondeur T1 qui se présente le long de la crête (14) enroulée autour de l'axe central longitudinal (13) et qui est mesurée dans une direction radiale perpendiculaire à l'axe central longitudinal (13) jusqu'à la ligne de liaison axiale imaginaire entre deux emplacements voisins, décalés de 360°, du fond de filetage (15).

3. Vis (1) selon la revendication 2,
**caractérisée en ce que**
le cœur (16) est la zone intérieure, vue en coupe transversale, de la vis (1) jusqu'à un diamètre de cœur dk = d/4, et
la dureté du cœur (16) est la valeur moyenne de la dureté à l'intérieur du diamètre de cœur dk.

4. Vis (1) selon l'une au moins des revendications précédentes,
**caractérisée** ce que
la dureté de la couche d'assouplissement (18) est la valeur moyenne de la dureté à l'intérieur de la couche d'assouplissement (18).

5. Vis (1) selon l'une au moins des revendications 2 à 4,
**caractérisée** ce que
la profondeur T1 est comprise entre 0,1 mm et 3,0 mm, en particulier entre 0,2 mm et 2,8 mm.

6. Vis (1) selon l'une au moins des revendications 2 à 4,
**caractérisée** ce que
le filetage (8) présente l'un des appariements de valeurs suivants :
- hauteur H : 0,4 mm à 0,7 mm ; profondeur T1 : 0,25 mm à 1,8 mm, ou
- hauteur H : 0,71 mm à 1,0 mm ; profondeur T1 : 0,25 mm à 2,7 mm, ou
- hauteur H : 1,01 mm à 1,5 mm ; profondeur T1 : 0,2 mm à 2,7 mm, ou
- hauteur H : 1,51 mm à 2,0 mm ; profondeur T1 : 0,2 mm à 2,7 mm, ou
- hauteur H : 2,01 mm à 2,5 mm ; profondeur T1 : 0,15 mm à 3,0 mm, ou
- hauteur H : 2,51 mm à 4,0 mm ; profondeur T1 : 0,15 mm à 4,0 mm.

7. Vis (1) selon l'une au moins des revendications précédentes,
**caractérisée** ce que
le cœur (16) possède une dureté de 400 HV à 650 HV, en particulier de 450 HB à 570 HV, et
la couche d'assouplissement (18) possède à l'extérieur une dureté de 300 HV à 380 HV.

8. Vis (1) selon l'une au moins des revendications précédentes,
**caractérisée** ce que
la dureté de la couche d'assouplissement (18) est réduite à l'extérieur d'au moins 7 %, en particulier de 10 % à 50 %, en particulier de 20 % à 40 %, par rapport à la dureté du cœur (16).

9. Vis (1) selon l'une au moins des revendications précédentes,
**caractérisée** ce que
le cœur (16) possède une résistance à la traction comprise entre 1400 N/mm² et 1850 N/mm²

10. Vis (1) selon l'une au moins des revendications précédentes,
**caractérisée par** une tête (5) et par une portion de tige (6) dépourvue de filetage, la portion de tige (6) présentant une couche d'assouplissement (18) qui est réalisée sous la forme d'une couche de bord extérieure, vue en coupe transversale, ayant une dureté réduite par comparaison au cœur (16) de la vis (1).

11. Vis (1) selon la revendication 10,
**caractérisée en ce que**
la couche d'assouplissement
ne s'étend pas sur toute la longueur de la portion de tige (6), ou
s'étend sur toute la longueur de la portion de tige (6) et sur la surface de transition d'appui de tête.

12. Procédé de réalisation d'une vis à haute résistance (1) selon l'une au moins des revendications précédentes, comprenant les étapes consistant à :
réaliser par formage une ébauche ayant une tête (5) et une tige,
**caractérisé par**
un traitement thermique de l'ébauche par trempe bainitique pour obtenir une structure bainitique en vue d'atteindre une dureté accrue,
une réduction de la dureté de l'ébauche au moins dans une partie de la longueur axiale de la tige pour obtenir une couche d'assouplissement (18) qui est réalisée sous la forme d'une couche de bord extérieure (17), vue en coupe transversale, ayant une dureté réduite par comparaison au cœur (16) de la vis (1),
ces étapes étant mises en œuvre de telle sorte que le cœur (16) présente une résistance à la traction comprise entre 1300 N/mm² et 2500 N/mm², et la couche d'assouplissement (18) possède à l'extérieur une résistance à la traction comprise entre 1000 N/mm² et 1200 N/mm², et
la réalisation d'une portion filetée (7) par formage d'un filetage (8) dans une zone de la tige espacée de la tête (5).

13. Procédé selon la revendication 12,
**caractérisé en ce que**
la réduction de la dureté s'effectue par chauffage inductif de l'ébauche.

14. Procédé selon la revendication 12 ou 13,
**caractérisé en ce que**
le chauffage inductif
s'effectue à une fréquence comprise entre environ 20 kHz et 500 kHz, en particulier entre environ 100 kHz et 400 kHz, et/ou
pendant une durée comprise entre environ 0,05 s et 30 s, en particulier entre environ 0,1 s et 10 s.

15. Procédé selon l'une au moins des revendications 12 à 14,
**caractérisé en ce que**
la réduction de la dureté par chauffage de l'ébauche s'effectue au laser.
